# EUROPÄISCHE PATENTSCHRIFT

(11) **EP 2 683 852 B1**
(45) Veröffentlichungstag und Bekanntmachung des Hinweises auf die Patenterteilung: **29.04.2015**
(21) Anmeldenummer: 12713653.9
(22) Anmeldetag: 27.03.2012
(51) Int. Cl.: C25B 9/20, H01M 8/02

(54) **ELEKTROLYSEZELLE MIT EINEM BLECHPAKET ÜBEREINANDER GESTAPELTER BLECHE MIT AUSNEHMUNGEN UND VERFAHREN ZU DEREN HERSTELLUNG UND BETRIEB**
ELECTROLYSIS CELL COMPRISING A STACK OF SHEETS PROVIDED WITH RECESSES, AND METHOD FOR MANUFACTURING AND OPERATING THE SAME
CELLULE ÉLECTROLYTIQUE DOTÉE DE TÔLES MUNIES D'ÉVIDEMENTS SUPERPOSÉES, POUR FORMER UN EMPILAGE DE TÔLES, SON PROCÉDÉ DE PRODUCTION ET SON FONCTIONNEMENT

(30) Priorität: 20.04.2011 DE 102011007759
(43) Veröffentlichungstag der Anmeldung: 15.01.2014
(73) Patentinhaber: Siemens Aktiengesellschaft, 80333 München (DE)
(72) Erfinder: HAHN, Alexander, 91341 Röttenbach (DE); HERTSCH, Hagen, 91056 Erlangen (DE); HUBER, Norbert, 91056 Erlangen (DE); CORDES, Ralf, 91056 Erlangen (DE); DENNERLEIN, Klaus, 91058 Erlangen (DE); KÜHN, Carola, 90449 Nürnberg (DE)
(86) Internationale Anmeldenummer: PCT/EP2012/055366
(87) Internationale Veröffentlichungsnummer: WO 2012/143211

(56) Entgegenhaltungen:
- EP-A1- 1 742 285
- WO-A1-99/67447
- DE-A1-102007 029 428
- US-A1- 2005 115 825
- US-A1- 2010 062 289

## Beschreibung

Die vorliegende Erfindung bezieht sich auf eine Elektrolysezelle umfassend wenigstens zwei Bipolarplatten, wenigstens einen Fluid-Zufluss und Abfluss sowie wenigstens ein Blechpaket angeordnet zwischen den wenigstens zwei Bipolarplatten, wobei das Blechpaket aus übereinander gestapelten Blechen aufgebaut ist und wenigstens zwei Bleche Ausnehmungen aufweisen, welche durchgehend durch die gesamte Dicke des jeweiligen Bleches ausgebildet sind. Weiterhin bezieht sich die vorliegende Erfindung auf ein Verfahren zur Herstellung und zum Betrieb der Elektrolysezelle.

Elektrolysezellen werden aus massiven Teilen, z.B. aus Titanplatten gefertigt. Dabei werden durch spanende oder prägende Bearbeitung der massiven Teile Kanalsysteme in das Material eingebracht. Diese Kanalsysteme dienen der Wasserzufuhr und der Gasabfuhr. Um durch spanende Bearbeitung Kanäle in die massiven Teile einbringen zu können, müssen die Teile eine große Dicke im Zentimeterbereich aufweisen. Dies führt zu hohen Material- und Bearbeitungskosten. Gerade in Hinblick auf eine Serienfertigung ist eine Reduzierung des aufzuwendenden Materials, des Fertigungsaufwands und der Kosten wünschenswert.

Aufgabe der vorliegenden Erfindung ist es, eine Elektrolysezelle anzugeben, welche einfach zu fertigen ist, welche bei der Fertigung wenig Material verbraucht und welche somit Kosten spart. Eine weitere Aufgabe der vorliegenden Erfindung ist ein Verfahren zur Herstellung einer solchen Elektrolysezelle anzugeben und ein Verfahren zum Betrieb der Elektrolysezelle anzugeben.

Die angegebene Aufgabe wird bezüglich der Elektrolysezelle mit den Merkmalen des Anspruchs 1 und bezüglich des Verfahrens zum Betrieb der Elektrolysezelle mit den Merkmalen des Anspruchs 11 sowie bezüglich des Verfahrens zur Herstellung der Elektrolysezelle mit den Merkmalen des Anspruchs 14 gelöst.

Vorteilhafte Ausgestaltungen der erfindungsgemäßen Elektrolysezelle und des Verfahrens zum Betrieb der Elektrolysezelle gehen aus den jeweils zugeordneten abhängigen Unteransprüchen hervor. Dabei können die Merkmale der nebengeordneten Ansprüche untereinander und mit Merkmalen eines jeweils zugeordneten Unteranspruchs oder vorzugsweise auch mit Merkmalen mehrerer zugeordneter Unteransprüche kombiniert werden.

Die erfindungsgemäße Elektrolysezelle umfasst wenigstens zwei Bipolarplatten, wenigstens zwei Wasserzu- und -abflüsse sowie wenigstens ein Blechpaket, angeordnet zwischen den wenigstens zwei Bipolarplatten. Das Blechpaket ist aus übereinander gestapelten Blechen aufgebaut, wobei wenigstens zwei Bleche Ausnehmungen aufweisen, welche durchgehend durch die gesamte Dicke des jeweiligen Bleches ausgebildet sind. Die wenigstens zwei Bleche sind derart übereinander angeordnet, dass sich Ausnehmungen benachbarter Bleche teilweise, aber nicht vollständig überlappen, wodurch in Richtung der Blechebene durchgehende Kanäle ausgebildet sind, welche in fluidischem Kontakt mit dem Fluid-Zufluss und Fluid-Abfluss sind. Diese Bleche lassen sich in einem Verfahren zur Herstellung der Elektrolysezelle einfach und kostengünstig herstellen, indem die Ausnehmungen aus den Blechen z.B. ausgestanzt werden. Alternativ können die Ausnehmungen auch ausgebohrt, gefräst, geätzt und/oder mit Hilfe eines Lasers ausgebildet werden. Die Verwendung von übereinander gestapelten Blechen mit Ausnehmungen zur Ausbildung von Kanälen führt zu einer Materialeinsparung im Gegensatz zur Verwendung von massiven Teilen, in deren Oberfläche die Kanäle gefräst werden, da die Bleche mit durchgehenden Ausnehmungen durchs Blech sehr dünn gefertigt werden können.

In einer bevorzugten Ausführungsform der erfindungsgemäßen Elektrolysezelle sind die Kanäle fluidisch mit den Fluid-Zu-und -abflüssen verbunden. Die Fluid-Zu- und -abflüsse können jeweils Anschlüsse an der Elektrolysezelle für eine Zu- oder Abströmung von Fluiden umfassen. Weiterhin kann die Elektrolysezelle elektrische Anschlüsse umfassen, insbesondere an den Bipolarplatten und/oder Blechen. Über diese Anschlüsse kann eine elektrische Spannung an die Elektrolysezelle angelegt werden um im Inneren eine Elektrolyse zu erreichen. Die Elektrolysezelle kann auch wenigstens eine MEA (Membran-Elektroden-Einheit) umfassen, welche eine Trennung von Sauerstoff und Wasserstoff ermöglicht.

Die Elektrolysezelle kann wenigstens zwei erste Bleche umfassen, welche derart übereinander angeordnet sind, dass sich Ausnehmungen der wenigstens zwei ersten Bleche teilweise, aber nicht vollständig überlappen. Dadurch werden in Richtung der Blechebene durchgehende erste Kanäle ausgebildet. Diese können mit einem ersten Fluid-Zufluss und Abfluss fluidisch verbunden sein. Dadurch kann eine erste Halbzelle der Elektrolysezelle gebildet werden oder sein. Die Elektrolysezelle kann wenigstens zwei zweite Bleche umfassen, welche derart übereinander angeordnet sind, dass sich Ausnehmungen der wenigstens zwei zweiten Bleche teilweise, aber nicht vollständig überlappen. Dadurch werden in Richtung der Blechebene durchgehende zweite Kanäle ausgebildet. Diese können mit einem zweiten Fluid-Zufluss und -Abfluss fluidisch verbunden sein. Dadurch kann eine zweite Halbzelle der Elektrolysezelle gebildet werden oder sein. Zwischen den wenigstens zwei ersten Blechen und den wenigstens zwei zweiten Blechen kann eine MEA angeordnet sein, über welche ein fluidischer Kontakt zwischen den ersten und zweiten Kanälen besteht.

Bei einem Verfahren zum Betrieb der Elektrolysezelle wird über einen Fluid-Zufluss ein Fluid, insbesondere Wasser, zugeführt. Dieses strömt in die Kanäle der wenigstens zwei Bleche und wird insbesondere über einen Fluid-Abfluss von den Kanälen der wenigstens zwei Bleche aus der Elektrolysezelle abgeführt.

Dabei kann über einen ersten Fluid-Zufluss ein Fluid, insbesondere Wasser, zugeführt werden, welches in die Kanäle der wenigstens zwei ersten Bleche strömt und insbesondere über einen ersten Fluid-Abfluss von den Kanälen der wenigstens zwei ersten Bleche aus der Elektrolysezelle abgeführt wird. Über einen zweiten Fluid-Zufluss kann ein Fluid, insbesondere Wasser, zugeführt werden, welches in die Kanäle der wenigstens zwei zweiten Bleche strömt und insbesondere über einen zweiten Fluid-Abfluss von den Kanälen der wenigstens zwei zweiten Bleche aus der Elektrolysezelle abgeführt wird. Sind die wenigstens zwei ersten Bleche und die wenigstens zwei zweiten Bleche voneinander durch eine MEA getrennt, so kann bei Anlegen einer Spannung zwischen den wenigstens zwei ersten Blechen und den wenigstens zwei zweiten Blechen ein elektrolytischer Umsatz von Wasser erfolgen.

Die Spannung kann über elektrische Anschlüsse an den Bipolarplatten und/oder an den Blechen erfolgen. Wasserstoff entsteht in den Kanälen der wenigstens zwei ersten Bleche und kann über den ersten Fluid-Abfluss aus der Elektrolysezelle abgeführt werden. Sauerstoff entsteht in den Kanälen der wenigstens zwei zweiten Bleche und kann über den zweiten Fluid-Abfluss aus der Elektrolysezelle abgeführt werden. Alternativ, abhängig von der Polarität der angelegten Spannung, kann der Wasserstoff in den Kanälen der wenigstens zwei zweiten Bleche entstehen und insbesondere über den zweiten Fluid-Abfluss aus der Elektrolysezelle abgeführt werden. In diesem Fall entsteht Sauerstoff in den Kanälen der wenigstens zwei ersten Bleche und kann über den ersten Fluid-Abfluss aus der Elektrolysezelle abgeführt werden.

Die MEA sorgt für eine Trennung von Sauerstoff und Wasserstoff, indem bei angelegter Spannung an den Bipolarplatten und/oder Blechen diese als Elektrode wirken. Dabei erfolgt an der Anode (positiv geladen) ein Umsatz von Wasser zu Sauerstoff und positiv geladenen Wasserstoff-Ionen, wobei letztere durch die MEA hindurchwandern und/oder diffundieren können. An der Kathode (negativ geladen) erfolgt ein Umsatz der Wasserstoff-Ionen zu molekularem Wasserstoff.

Die Ausnehmungen, welche die Kanäle bilden, weisen erfindungsgemäß eine Y-Form auf. Die Y-Form kann aus um jeweils 120 grad gedrehten gleichen Teilen zusammengesetzt sein.

Die Ausnehmungen können ein regelmäßiges Muster ergeben, was vorteilhaft ist um durch überlappende Ausnehmungen durchgehende Kanäle zu bilden. Regelmäßige Muster sind auch besonders einfach erzeug- bzw. herstellbar.

Die Ausnehmungen, welche die Form eines Y aufweisen und in benachbarten, sich berührenden Blechen angeordnet sind, können so angeordnet sein, dass sie sich nur im Bereich der Enden der Y-Form überlappen. Dabei kann jedes Ende einer Ausnehmung mit Y-Form eines Bleches mit jeweils einem Ende einer Ausnehmung mit Y-Form eines benachbarten Bleches überlappt angeordnet sein.

Die Bleche können eine Dicke im Bereich von 0.5 bis 5 mm aufweisen und die Kanäle können eine Breite im Bereich von 2 bis 10 mm aufweisen.

Die Bleche können aus einem Metall, insbesondere elektrisch leitendem Eisen, Stahl, Titan oder Kupfer, bestehen oder dieses umfassen. Dadurch können die Bleche gleichzeitig, neben dem Bilden der Kanäle auch als Elektrode genutzt werden. Die Bleche können über Bereiche, an welchen sie sich gegenseitig direkt berühren, miteinander in elektrischem Kontakt stehen. Die Bleche können alternativ oder zusätzlich mit den elektrischen Anschlüssen der Elektrolysezelle in elektrischem Kontakt stehen. So ist ein guter Stromfluss über die Bleche, und damit verbunden ein guter Umsatz bei der Elektrolyse an der Oberfläche in den Kanälen der Bleche möglich, d.h. eine effektive Elektrolyse.

Der Erfindung liegt allgemein die Idee zu Grunde, dass ein besonders guter Stoffumsatz bei einer Elektrolyse erfolgt, in einer Elektrolysezelle mit einem Blechpaket über Kanäle mit großer innerer Oberfläche, wobei sich die Kanäle besonders einfach ausbilden lassen z.B. durch ausstanzen eines Musters von Ausnehmungen aus einem Blech und Überlagerung z.B. gleicher Bleche übereinander, insbesondere gegeneinander verschoben. Das Fluid, welches umgesetzt werden soll (z.B. Wasser) und das Fluid welches als Umsatz entsteht (z.B. Sauerstoff und Wasserstoff), durchströmt entsprechende Bereiche der Elektrolysezelle mit möglichst geringem Druckverlust. Eine große Fläche in den Kanälen bedeutet einen verbesserten Elektronenübergang bei der Elektrolyse an den Kanaloberflächen/Elektrodenflächen. Spezielle Formen der Ausnehmungen führen zu besonders günstigen Strömungsverhältnissen in den Kühlkanälen bei geringem Platzverbrauch der Kanäle in den Blechen und hoher mechanischer Stabilität der Blechstapel. Damit ist ein gleichmäßiger Massenfluss des Fluids, eine mögliche gute Kühlwirkung, eine hohe elektrische Leitfähigkeit insbesondere auch in Blechstapelrichtung (senkrecht zur Blechlängsausdehnung) und eine hohe Effizienz der Elektrolysezelle verbunden.

Für das erfindungsgemäße Verfahren zur Herstellung der Elektrolysezelle und für das erfindungsgemäße Verfahren zum Betrieb der Elektrolysezelle ergeben sich die vorstehend erwähnten, mit der erfindungsgemäßen Elektrolysezelle beschriebenen Vorteile.

Bevorzugte Ausführungsformen der Erfindung mit vorteilhaften Weiterbildungen gemäß den Merkmalen der abhängigen Ansprüche werden nachfolgend anhand der folgenden Figuren näher erläutert, ohne jedoch darauf beschränkt zu sein.

Es zeigen:
- Fig. 1: den schematischen Aufbau einer Elektrolysezelle 1 nach dem Stand der Technik in einer Schnittansicht, und
- Fig. 2: eine Halbzelle 2 der in Fig. 1 gezeigten Elektrolysezelle 1, und
- Fig. 3: eine Halbzelle 2 einer erfindungsgemäßen Elektrolysezelle 1 mit einem Blechpaket 13, welches Fluid-Kanäle 9 umfasst, und
- Fig. 4: das Blechpaket 13 mit Kanälen 9 der Fig. 3 in Schrägansicht im Detail, und
- Fig. 5: eine Aufsicht auf die Bleche 11, 12 und deren Anordnung 13.

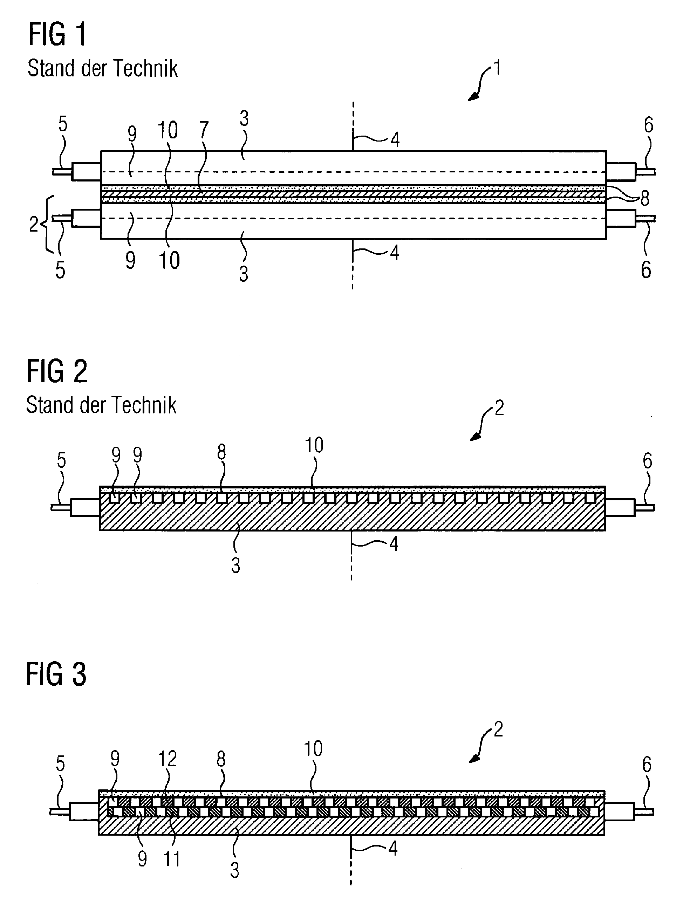

In Fig. 1 ist ein prinzipieller Aufbau als Schnitt entlang einer Längsachse einer Elektrolysezelle 1 nach dem Stand der Technik dargestellt. Die Elektrolysezelle 1 umfasst zwei deckungsgleich aufeinander angeordnete Halbzellen 2, mit jeweils einer Bipolarplatte 3. An der Bipolarplatte 3 ist ein Strom- bzw. Spannungsanschluss vorgesehen, welcher im Weiteren als elektrischer Anschluss 4 bezeichnet wird. Bei der Verwendung der Elektrolysezelle in einem Stack sind diese Anschlüsse durch benachbarte Zellen ersetzt. Weiterhin sind jeweils an jeder Halbzelle 2 ein Fluid-Zufluss 5 und ein Fluid-Abfluss 6 vorgesehen. Zwischen den zwei aufeinander angeordneten Halbzellen 2 ist eine MEA 7, d.h. eine Membran-Elektroden-Einheit angeordnet. Jeweils die Seite 8 einer Halbzelle 2, welche mit der MEA 7 in direktem Kontakt steht, ist mit Kanälen 9 ausgestattet, welche in fluidischen Kontakt zu dem Anschluss für den Fluid-Zufluss 5 und den Anschluss für den Fluid-Abfluss 6 stehen. Die Seite 8 bzw. die Kanäle 9 sind durch eine Gas-Diffusionsschicht 10 bedeckt, welche in direktem Kontakt mit der MEA 7 steht. Da die zwei Halbzellen 2 einer Elektrolysezelle 1 gleich und/oder spiegelverkehrt aufgebaut sind, werden im Weiteren für äquivalente Elemente bzw. Teile der zwei Halbzellen 2 gleiche Bezugszeichen verwendet.

In Fig. 2 ist eine Halbzelle 2 der in Fig. 1 gezeigten Elektrolysezelle 1 im Detail als Schnitt entlang der Längsachse dargestellt. Eine Elektrolysezelle 1 besteht aus zwei gleich aufgebauten Halbzellen 2. Deshalb ist der Einfachheit halber nur eine Halbzelle 2 im Detail dargestellt. In der Bipolarplatte 3 der Halbzelle 2 sind auf einer Seite 8 an der Oberfläche die Kanäle 9 als Vertiefungen in dem massiven Plattenmaterial eingearbeitet, z.B. durch Fräsen. Das Plattenmaterial besteht aus einem gut leitenden Material wie z.B. Kupfer, Titan, Stahl oder Eisen. An der Bipolarplatte 3 ist direkt ein elektrischer Kontakt 4 angebracht, um an die Platte 3 ein elektrisches Potential anlegen zu können bzw. um über die Platte 3 einen elektrischen Strom fließen lassen zu können.

Über den Anschluss für den Fluid-Zufluss 5 und den Anschluss für den Fluid-Abfluss 6 kann ein Fluid der Halbzelle 2 zugeführt werden, welches durch die Kanäle 9 strömt, und von der Halbzelle 2 abgeführt wird. Das Fluid, z.B. Wasser, wird bei angelegter positiver Spannung elektrolytisch umgesetzt, d.h. es entsteht in den Kanälen 9 an der Bipolarplatte 3 Sauerstoff und positiv geladene Wasserstoff-Ionen. Der Sauerstoff kann über den Anschluss für den Fluid-Abfluss 6 abgeführt werden.

Die positiv geladenen Wasserstoff-Ionen können durch die Gas-Diffusionsschicht 10 über die in Fig. 1 gezeigte MEA 7 in die zweite Halbzelle 2 der Elektrolysezelle 1 wandern, wo sie bei negativ geladener Bipolarplatte 3 zu molekularem Wasserstoff umgesetzt werden. Unter Wandern sind dabei Diffusion, Konzentrationsausgleichsbewegungen und/oder durch elektrische Felder erzeugte Bewegungen von Teilchen zu verstehen. Der molekulare Wasserstoff wird über die Kanäle 9 der zweiten Halbzelle 2 und über den Anschluss für den Fluid-Abfluss 6 abgeführt.

Der in den Fig. 1 und 2 gezeigte Aufbau einer Elektrolysezelle 1 aus zwei Halbzellen 2 mit jeweils einer massiven Bipolarplatte 3 hat den Nachteil, dass für die Bipolarplatte 3 sehr viel Material benötigt wird und eine Fertigung der Kanäle 9 in der Bipolarplatte 3 sehr aufwendig ist.

In Fig. 3 ist eine Halbzelle 2 einer erfindungsgemäßen Elektrolysezelle 1 mit einem Blechpaket 13 gezeigt, das aus zwei übereinander gestapelten Blechen 11, 12 aufgebaut ist. Die Halbzelle 2 ist analog der in Fig. 2 gezeigten aufgebaut, mit Ausnahme der Bipolarplatte 3. Statt in die Bipolarplatte 3 Kanäle 9 als Vertiefungen z.B. durch fräsen einzubringen, sind auf der Bipolarplatte 3 Bleche 11, 12 mit Ausnehmungen 14 angeordnet. Die Ausnehmungen 9 in den Blechen 11, 12 sind gegeneinander derart verschoben, dass sie durchgehende Kanäle in der Längsebene der Bleche (senkrecht zur Bildebene in Fig. 3) ergeben. Auf den Blechen 11, 12 ist analog dem Beispiel in Fig. 2 auf den Kanälen 9 eine Gas-Diffusionsschicht 10 angeordnet.

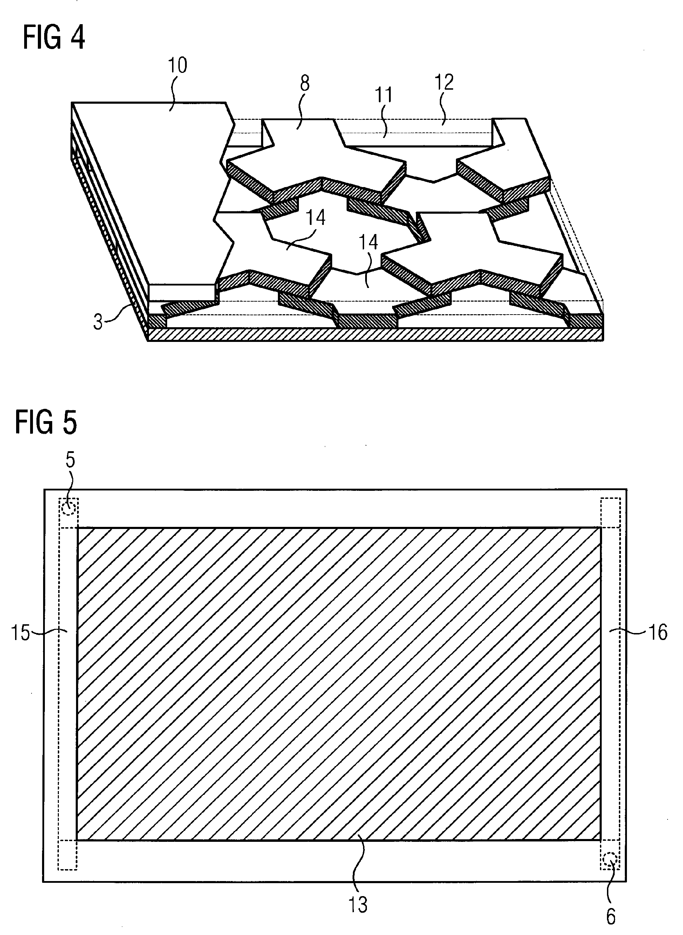

In Fig. 4 ist die Anordnung der Bleche 11, 12 mit den Ausnehmungen 14 im Detail als Schrägansicht dargestellt. Die Y-förmigen Ausnehmungen 14 des Blechs 12 sind derart auf den Y-förmigen Ausnehmungen 14 des Blechs 11 angeordnet, dass sich die Ausnehmungen 14 der benachbarten Bleche 11, 12 jeweils nur an den Enden der Y-Formen überlappen und dadurch Kanäle 9 entlang der Blechebene bilden. Nur schematisch sind die Gas-Diffusionsschicht 10 und die Bipolarplatte 3 dargestellt.

Die Ausnehmungen 14 in einem Blech 11 (ohne Betrachtung des zweiten Bleches 12) sind in regelmäßigen Abständen voneinander angeordnet ohne sich zu berühren. Analog ist das zweite Blech 12 aufgebaut. Benachbarte Bleche 11 und 12 sind mit ihren Ausnehmungen 14 so angeordnet, dass sich die Ausnehmungen der Bleche 11 und 12 nur in ihren Randbereichen überlappen. Jedes Ende einer Y-förmigen Ausnehmung eines Bleches 11, überlappt mit einem Ende, insbesondere mit genau einem Ende, einer Y-förmigen Ausnehmung eines benachbarten Bleches 12 und umgekehrt. Durch die Überlappenden Ausnehmungen 14 benachbarter Bleche 11 und 12 werden durch die Bleche 11, 12 vollständig durchgehende Fluid-Kanäle 14 gebildet. Die so gebildeten Kanäle 14 ermöglichen Fluid-Strömungen mit einem minimierten Druckabfall in den Kanälen 14. Das Fluid strömt in den Kanälen 14 sowohl in der Blechebene, als auch senkrecht zur Blechebene. Eine besonders gute Durchströmung der Bleche 11, 12 ist dadurch möglich, wobei trotz kompaktem Aufbau eine große Fläche in den Kanälen 14 zum elektrolytischen Umsatz besteht.

Der Einfachheit halber nicht dargestellt ist der Aufbau des Blechpaketes 13 aus mehr als 2 Blechen 11, 12.

Dabei gibt es alternative Möglichkeiten der Stapelung von Blechen. In einem Blechstapel können die Bleche derart angeordnet sein, dass jedes Ende einer Ausnehmungen sich jeweils nur mit genau einem Ende einer Ausnehmung eines Nachbarbleches überlappt. Alle Bleche weisen gleiche Muster von Ausnehmungen auf und sind gegeneinander verschoben. Eine alternative Ausführungsform ist das alternierende Anordnen von Blechen. Dabei überlappen sich Ausnehmungen nur von jeweils zwei benachbarten Blechen und bilden Kühlkanäle. Ein drittes Blech ist jeweils mit seinen Ausnehmungen so angeordnet, dass es nicht mit den Ausnehmungen der ersten zwei Bleche überlappt, sondern mit einem zu ihm weiteren benachbarten Blech.

In einer weiteren Ausführungsform können jeweils ein Blechstapel durch mehrere Bleche mit gleichen Ausnehmungen gebildet werden, welche vollständig deckungsgleich übereinander gestapelt sind. Benachbarte Blechstapel, jeweils gebildet aus den mehreren deckungsgleichen Blechen sind so gegeneinander verschoben, dass sich die Ausnehmungen benachbarter Blechstapel nur in ihrem Randbereich überlappen. Dadurch können mit gleich dicken Blechen mit gleichen Mustern von Ausnehmungen je nach Bedarf unterschiedliche Kanaldurchmesser hergestellt werden, abhängig von der Zahl der Bleche eines Blechstapels. Die Bleche weisen in der Regel eine Dicke im Bereich von 0.5 bis 5 mm auf. Die Kanäle weisen somit typischer Weise ebenfalls eine Dicke von 0.5 bis 5 mm (1 bis 10 mm an Stellen der Überlappung von Ausnehmungen) auf in Richtung senkrecht zur Blechebene. Die Bleche und Kanäle können aber auch andere Größen, z.B. im Bereich von einigen Zentimetern Dicke aufweisen.

Die Breite der Ausnehmungen, und somit der Kanäle, liegt bevorzugt im Bereich von 2 bis 10 mm. Es sind aber auch Kanalbreiten im Bereich von Zentimetern möglich.

In den Blechen und/oder Blechpaketen können statt regelmäßiger Muster mit Y-Ausnehmungen gleicher Größe auch unterschiedlich ausgeformte Ausnehmungen ausgebildet sein.

In Fig. 5 ist eine Aufsicht auf das in Fig. 4 gezeigte Blechpaket 13 aus Blechen 11 und 12 dargestellt, mit einem Fluid-Zufluss 15 und einem Fluid-Abfluss 16 in Form eines breiten Kanals mit Bohrungen in der Bipolarplatte 3 für die Anschlüsse 5, 6. Über den Anschluss 5 kann Wasser einer Halbzelle 2 zugeführt werden, welches über den Fluid-Zufluss 15 in die Kanäle 9, gebildet durch die Ausnehmungen 14 fließt, und bei angelegter positiver Spannung an der Halbzelle 2 elektrolytisch zu Sauerstoff und negativ geladenen Wasserstoff-Ionen umgesetzt wird. Der Sauerstoff und das nicht umgesetzte Wasser wird über den Fluid-Abfluss 16 und dem Abfluss-Anschluss 6 aus der Elektrolytzelle 1 abgeführt. Der positiv geladenen Wasserstoff strömt über die Gas-Diffusionsschicht 10 der Halbzelle 2, über die MEA 7 und eine Gas-Diffusionsschicht 10 einer zweiten Halbzelle 2 in Kanäle der zweiten Halbzelle 2, wird dort in molekularen Wasserstoff bei negativem Potential an der zweiten Halbzelle 2 bzw. deren Blechpaket 13 umgewandelt, und über die Kanäle 9 in den Fluid-Abfluss 16 und von dort über den Anschluss 6 aus der zweiten Halbzelle 2 abgeführt. Die zweite Halbzelle 2 kann ebenfalls von Wasser durchströmt werden, welches über den Anschluss 5 der zweiten Halbzelle 2 zum Fluid-Zufluss 15 der zweiten Halbzelle 2 in die Kanäle 9 zugeführt wird, wobei die Kanäle durch Ausnehmungen 14 in einem zweiten Blechpaket 13 gebildet sind.

Die Bleche der ersten und zweiten Halbzelle 2 der Elektrolysezelle 1 bestehen bevorzugt aus einem elektrisch leitenden Metall, insbesondere einem Stahl, Eisen, Kupfer oder Titan. Bei elektrischer Kontaktierung wirken die Oberflächen der Kanäle bzw. Bleche als Elektrodenoberflächen für die Elektrolyse. Es sind aber auch weitere reine Metalle oder Metall-Legierungen geeignet.

## Patentansprüche

1. Elektrolysezelle (1) umfassend wenigstens zwei Bipolarplatten (3), wenigstens einen Fluid-Zufluss (15) und Fluid-Abfluss (16) sowie wenigstens ein Blechpaket (13), angeordnet zwischen den wenigstens zwei Bipolarplatten (3), wobei das Blechpaket (13) aus übereinander gestapelten Blechen (11, 12) aufgebaut ist und wenigstens zwei Bleche (11, 12) Ausnehmungen (14) aufweisen, welche durchgehend durch die gesamte Dicke des jeweiligen Bleches (11, 12) ausgebildet sind, wobei die wenigstens zwei Bleche (11, 12) derart übereinander angeordnet sind, dass sich Ausnehmungen (14) benachbarter Bleche (11, 12) teilweise, aber nicht vollständig überlappen, **dadurch gekennzeichnet, dass** in Richtung der Blechebene durchgehende Kanäle (9) ausgebildet sind, welche in fluidischem Kontakt mit dem Fluid-Zufluss (15) und Fluid-Abfluss (16) sind, wobei die Ausnehmungen (14) eine Y-Form aufweisen.

2. Elektrolysezelle (1) nach Anspruch 1, **dadurch gekennzeichnet, dass** Kanäle (9) fluidisch mit dem Fluid-Zufluss (15) und dem Fluid-Abfluss (16) verbunden sind, und/oder dass der Fluid-Zufluss (15) und Abfluss (16) jeweils Anschlüsse (5, 6) an der Elektrolysezelle (1) für eine Zu- oder Abströmung von Fluid umfassen, und/oder dass die Elektrolysezelle (1) elektrische Anschlüsse (4) insbesondere an den Bipolarplatten (3) und/oder Blechen (11, 12) umfassen, und/oder dass die Elektrolysezelle (1) wenigstens eine MEA (7) umfasst.

3. Elektrolysezelle (1) nach einem der vorhergehenden Ansprüche, **dadurch gekennzeichnet, dass** wenigstens zwei erste Bleche (11, 12) derart übereinander angeordnet sind, dass sich Ausnehmungen (14) der wenigstens zwei ersten Bleche (11, 12) teilweise, aber nicht vollständig überlappen, wodurch in Richtung der Blechebene durchgehende erste Kanäle (9) ausgebildet sind, welche insbesondere mit einem ersten Fluid-Zufluss (15) und Abfluss (16) fluidisch verbunden sind, und dass wenigstens zwei zweite Bleche (11, 12) derart übereinander angeordnet sind, dass sich Ausnehmungen (14) der wenigstens zwei zweiten Bleche (11, 12) teilweise, aber nicht vollständig überlappen, wodurch in Richtung der Blechebene durchgehende zweite Kanäle (9) ausgebildet sind, welche insbesondere mit einem zweiten Fluid-Zufluss (15) und Abfluss (16) fluidisch verbunden sind, wobei zwischen den wenigstens zwei ersten Blechen (11, 12) und den wenigstens zwei zweiten Blechen (11, 12) eine MEA (7) angeordnet ist, über welche ein fluidischer Kontakt zwischen den ersten und zweiten Kanälen (9) besteht.

4. Elektrolysezelle (1) nach einem der vorhergehenden Ansprüche, **dadurch gekennzeichnet, dass** die Y-Form aus um jeweils 120 Grad gedrehten gleichen Teilen zusammengesetzt ist.

5. Elektrolysezelle (1) nach einem der vorhergehenden Ansprüche, **dadurch gekennzeichnet, dass** die Ausnehmungen (14) ein regelmäßiges Muster ergeben.

6. Elektrolysezelle (1) nach einem der Ansprüche 4 oder 5, **dadurch gekennzeichnet, dass** Ausnehmungen (14), welche die Form eines Y aufweisen und in benachbarten, sich berührenden Blechen (11, 12) angeordnet sind, sich nur im Bereich der Enden der Y-Form überlappen.

7. Elektrolysezelle (1) nach Anspruch 6, **dadurch gekennzeichnet, dass** jedes Ende einer Ausnehmung (14) mit Y-Form eines Bleches (11, 12) mit jeweils einem Ende einer Ausnehmung (14) mit Y-Form eines benachbarten Bleches (12, 11) überlappt angeordnet ist.

8. Elektrolysezelle (1) nach einem der vorhergehenden Ansprüche, **dadurch gekennzeichnet, dass** die Bleche (11, 12) eine Dicke im Bereich von 0.5 bis 5 mm aufweisen und die Kanäle (9) eine Breite im Bereich von 2 bis 10 mm aufweisen.

9. Elektrolysezelle (1) nach einem der vorhergehenden Ansprüche, **dadurch gekennzeichnet, dass** die Bleche (11, 12) aus einem Metall, insbesondere elektrisch leitendem Stahl, Eisen, Kupfer, oder Titan bestehen oder dieses umfassen.

10. Elektrolysezelle (1) nach einem der Ansprüche 2 bis 9, **dadurch gekennzeichnet, dass** die Bleche (11, 12) über Bereiche, an welchen sie sich gegenseitig direkt berühren miteinander in elektrischem Kontakt stehen und/oder dass die Bleche (11, 12) mit den elektrischen Anschlüssen (4) der Elektrolysezelle (1) in elektrischem Kontakt stehen.

11. Verfahren zum Betrieb einer Elektrolysezelle (1) nach einem der vorhergehenden Ansprüche, bei welchem über einen Fluid-Zufluss (15) ein Fluid, insbesondere Wasser, zugeführt wird, welches in die Kanäle (9) der wenigstens zwei Bleche (11, 12) strömt und insbesondere über einen Fluid-Abfluss (16) von den Kanälen (9) der wenigstens zwei Bleche (11, 12) aus der Elektrolysezelle (1) abgeführt wird.

12. Verfahren nach Anspruch 11, **dadurch gekennzeichnet, dass** über einen ersten Fluid-Zufluss (5) ein Fluid, insbesondere Wasser, zugeführt wird, welches in die Kanäle (9) der wenigstens zwei ersten Bleche (11, 12) strömt und insbesondere über einen ersten Fluid-Abfluss (16) von den Kanälen (9) der wenigstens zwei ersten Bleche (11, 12) aus der Elektrolysezelle (1) abgeführt wird und dass über einen zweiten Fluid-Zufluss (15) ein Fluid, insbesondere Wasser, zugeführt wird, welches in die Kanäle (9) der wenigstens zwei zweiten Bleche (11, 12) strömt und insbesondere über einen zweiten Fluid-Abfluss (16) von den Kanälen (9) der wenigstens zwei zweiten Bleche (11, 12) aus der Elektrolysezelle (1) abgeführt wird, wobei die wenigstens zwei ersten Bleche (11, 12) und die wenigstens zwei zweiten Bleche (11, 12) voneinander durch eine MEA (7) getrennt werden.

13. Verfahren nach Anspruch 12, **dadurch gekennzeichnet, dass** bei Anlegen einer Spannung zwischen den wenigstens zwei ersten Blechen (11, 12) und den wenigstens zwei zweiten Blechen (11, 12), insbesondere über elektrische Anschlüsse (4) an den Bipolarplatten (3) und/oder Blechen (11, 12), ein elektrolytischer Umsatz von Wasser erfolgt, wobei Wasserstoff in den Kanälen (9) der wenigstens zwei ersten Bleche (11, 12) entsteht und insbesondere über den ersten Fluid-Abfluss (16) aus der Elektrolysezelle (1) abgeführt wird und Sauerstoff in den Kanälen (9) der wenigstens zwei zweiten Bleche (11, 12) entsteht und insbesondere über den zweiten Fluid-Abfluss (16) aus der Elektrolysezelle (1) abgeführt wird, oder wobei Wasserstoff in den Kanälen (9) der wenigstens zwei zweiten Bleche (11, 12) entsteht und insbesondere über den zweiten Fluid-Abfluss (16) aus der Elektrolysezelle (1) abgeführt wird und Sauerstoff in den Kanälen (9) der wenigstens zwei ersten Bleche (11, 12) entsteht und insbesondere über den ersten Fluid-Abfluss (16) aus der Elektrolysezelle (1) abgeführt wird.

14. Verfahren zum Herstellen einer Elektrolysezelle (1) nach einem der Ansprüche 1 bis 10, **dadurch gekennzeichnet, dass** die Ausnehmungen (14) aus den Blechen (11, 12) ausgestanzt und/oder ausgebohrt und/oder gefräst und/oder geätzt und/oder mit Hilfe eines Lasers ausgebildet werden.

## Claims

1. Electrolysis cell (1) comprising at least two bipolar plates (3), at least one fluid inflow (15) and fluid outflow (16) and at least one laminated core (13) arranged between the at least two bipolar plates (3), wherein the laminated core (13) is constructed from laminations (11, 12) which are stacked on top of one another and at least two laminations (11, 12) have recesses (14) which are configured to extend through the entire thickness of the respective lamination (11, 12), the at least two laminations (11, 12) being arranged on top of one another such that recesses (14) of adjacent laminations (11, 12) partially, but not completely, overlap, **characterised in that**, in the direction of the plane of the laminations, continuous channels (9) are formed which are in fluidic contact with the fluid inflow (15) and the fluid outflow (16), the recesses (14) having a Y-shape.

2. Electrolysis cell (1) according to claim 1, **characterised in that** channels (9) are fluidically connected to the fluid inflow (15) and the fluid outflow (16), and/or that the fluid inflow (15) and outflow (16) each comprise connections (5, 6) to the electrolysis cell (1) for an inward or outward flow of fluid, and/or that the electrolysis cell (1) comprises electrical terminals (4), in particular at the bipolar plates (3) and/or laminations (11, 12), and/or that the electrolysis cell (1) comprises at least one MEA (7).

3. Electrolysis cell (1) according to one of the preceding claims, **characterised in that** at least two first laminations (11, 12) are arranged on top of one another such that recesses (14) of the at least two first laminations (11, 12) overlap partially, but not completely, so that continuous first channels (9) are formed in the direction of the plane of the laminations, said first channels being fluidically connected, in particular, to a first fluid inflow (15) and outflow (16) and that at least two second laminations (11, 12) are arranged on top of one another such that recesses (14) in the at least two second laminations (11, 12) overlap partially, but not completely, such that continuous second channels (9) are formed in the direction of the plane of the laminations, said second channels (9) being fluidically connected, in particular, to a second fluid inflow (15) and outflow (16), wherein an MEA (7) is arranged between the at least two first laminations (11, 12) and the at least two second laminations (11, 12), by means of which MEA a fluidic contact exists between the first and second channels (9).

4. Electrolysis cell (1) according to one of the preceding claims, **characterised in that** the Y-shape is made up from identical parts rotated, in each case, through 120 degrees.

5. Electrolysis cell (1) according to one of the preceding claims, **characterised in that** the recesses (14) form a regular pattern.

6. Electrolysis cell (1) according to either claim 4 or claim 5, **characterised in that** recesses (14) which have the shape of a letter Y and are arranged in adjacent mutually contacting laminations (11, 12) are arranged so as to overlap only in the region of the ends of the Y-shape.

7. Electrolysis cell (1) according to claim 6, **characterised in that** each end of a Y-shaped recess (14) in one lamination (11, 12) is arranged overlapping with one end of a Y-shaped recess (14) of an adjacent lamination (12, 11).

8. Electrolysis cell (1) according to one of the preceding claims, **characterised in that** the laminations (11, 12) have a thickness in the range from 0.5 mm to 5 mm and the channels (9) have a width in the range from 2 mm to 10 mm.

9. Electrolysis cell (1) according to one of the preceding claims, **characterised in that** the laminations (11, 12) are made of or comprise a metal, in particular, electrically conductive steel, iron, copper or titanium.

10. Electrolysis cell (1) according to one of claims 2 to 9, **characterised in that** the laminations (11, 12) are in electrical contact with one another via regions of direct physical contact and/or that the laminations (11, 12) are in electrical contact with the electrical terminals (4) of the electrolysis cell (1).

11. Method for operating an electrolysis cell (1) according to one of the preceding claims, wherein a fluid, in particular water, is fed via a fluid inflow (15) and flows into the channels (9) of the at least two laminations (11, 12) and is conducted away from the channels (9) of the at least two laminations (11, 12) out of the electrolysis cell (1), in particular, via a fluid outflow (16).

12. Method according to claim 11, **characterised in that** a fluid, in particular water, is fed via a first fluid inflow (5) and flows into the channels (9) of the at least two first laminations (11, 12) and is conducted away from the channels (9) of the at least two first laminations (11, 12) out of the electrolysis cell (1), in particular via a first fluid outflow (16) and that a fluid, in particular water, is fed via a second fluid inflow (15) and flows into the channels (9) of the at least two second laminations (11, 12) and is conducted away from the channels (9) of the at least two second laminations (11, 12) out of the electrolysis cell (1), in particular via a second fluid outflow (16), the at least two first laminations (11, 12) and the at least two second laminations (11, 12) being separated from one another by an MEA (7).

13. Method according to claim 12, **characterised in that** when a voltage is applied to the bipolar plates (3) and/or laminations (11, 12) between the at least two first laminations (11, 12) and the at least two second laminations (11, 12), in particular via electrical terminals (4), the electrolytic conversion of water takes place, wherein hydrogen is formed in the channels (9) of the at least two first laminations (11, 12) and is conducted, in particular, via the first fluid outflow (16), out of the electrolysis cell (1), and oxygen is formed in the channels (9) of the at least two second laminations (11, 12) and is conducted out of the electrolysis cell (1), in particular via the second fluid outflow (16), or wherein hydrogen is formed in the channels (9) of the at least two second laminations (11, 12) and is conducted away out of the electrolysis cell (1), in particular via the second fluid outflow (16) and oxygen is formed in the channels (9) of the at least two first laminations (11, 12) and is conducted away out of the electrolysis cell (1), in particular, via the first fluid outflow (16).

14. Method for manufacturing an electrolysis cell (1) according to one of claims 1 to 10, **characterised in that** the recesses (14) are stamped and/or bored and/or milled and/or etched and/or formed with the aid of a laser, out of the laminations (11, 12).

## Revendications

1. Cellule d'électrolyse, comprenant au moins deux plaques ( 3 ) bipolaires, au moins une entrée ( 15 ) de fluide et une sortie ( 16 ) de fluide, ainsi qu'au moins un paquet ( 13 ) de tôles disposées entre les au moins deux plaques ( 3 ) bipolaires, le paquet ( 13 ) de tôles étant formé de tôles ( 11, 12 ) empilées les unes sur les autres et au moins deux tôles ( 11, 12 ) ayant des évidements ( 14 ), qui sont constituées en traversant toute l'épaisseur de la tôle ( 11, 12 ) respective, les au moins deux tôles ( 11, 12 ) étant disposées l'une au-dessus de l'autre, de manière à ce que des évidements ( 14 ) de tôle ( 11, 12 ) voisins se superposent en partie, mais non complètement, **caractérisée en ce qu'**il est constitué des canaux ( 9 ), qui sont continus dans la direction du plan de tôle et qui sont en contact fluidique avec l'entrée ( 15 ) de fluide et avec la sortie ( 16 ) de fluide, les évidements ( 14 ) ayant une forme en Y.

2. Cellule ( 1 ) d'électrolyse suivant la revendication 1, **caractérisée en ce que** les canaux ( 9 ) communiquent fluidiquement avec l'entrée ( 15 ) de fluide et avec la sortie ( 16 ) de fluide et/ou **en ce que** l'entrée ( 15 ) de fluide et la sortie ( 16 ) comprennent respectivement des raccords ( 5, 6 ) à la cellule ( 1 ) d'électrolyse pour une entrée ou une sortie de fluide et/ou **en ce que** la cellule ( 1 ) d'électrolyse comprend des bornes ( 4 ) électriques, notamment sur les plaques ( 3 ) bipolaires et/ou sur les tôles ( 11, 12 ) et/ou **en ce que** la cellule ( 1 ) d'électrolyse comprend au moins une unité ( 7 ) membrane électrolyte.

3. Cellule ( 1 ) d'électrolyse suivant l'une des revendications précédentes, **caractérisée en ce qu'**au moins deux premières tôles ( 11, 12 ) sont disposées l'une au-dessus de l'autre, de manière à ce que des évidements ( 14 ) des au moins deux premières tôles ( 11, 12 ) se recouvrent en partie, mais non complètement, en créant ainsi des premiers canaux ( 9 ), qui sont continus dans la direction du plan de tôle et qui communiquent fluidiquement, notamment avec une première entrée ( 15 ) de fluide et une première sortie ( 16 ) de fluide, et **en ce qu'**au moins deux deuxièmes tôles ( 11, 12 ) sont disposées l'une au-dessus de l'autre, de manière à ce que des évidements ( 14 ) des au moins deux deuxièmes tôles ( 11, 12 ) se recouvrent en partie, mais non complètement, en constituant ainsi des deuxièmes canaux ( 9 ), qui sont continus dans la direction du plan de tôle et qui communiquent fluidiquement, notamment avec une deuxième entrée ( 15 ) de fluide et une deuxième sortie ( 16 ) de fluide, dans laquelle entre les au moins deux premières tôles ( 11, 12 ) et les au moins deux deuxièmes tôles ( 11, 12 ) est disposée une unité ( 7 ) membrane électrolyte, par laquelle il existe un contact fluidique entre les premiers et les deuxièmes canaux.

4. Cellule ( 1 ) d'électrolyse suivant l'une des revendications précédentes, **caractérisée en ce que** la forme en Y est composée de parties pareilles tournées respectivement de 120 degrés.

5. Cellule ( 1 ) d'électrolyse suivant l'une des revendications précédentes, **caractérisée en ce que** les évidements ( 14 ) donnent une configuration régulière.

6. Cellule ( 1 ) d'électrolyse suivant l'une des revendications 4 ou 5, **caractérisée en ce que** les évidements ( 14 ), qui ont la forme d'un Y et qui sont disposés dans des tôles ( 11, 12 ) voisines, qui se touchent, ne se recouvrent que dans la région des extrémités des formes en Y.

7. Cellule ( 1 ) d'électrolyse suivant la revendication 6, **caractérisée en ce que** chaque extrémité d'un évidement ( 14 ) ayant une forme en Y d'une tôle ( 11, 12 ) est disposée à recouvrement avec respectivement une extrémité d'un évidement ( 14 ) ayant une forme en Y d'une tôle ( 12, 11 ) voisine.

8. Cellule ( 1 ) d'électrolyse suivant l'une des revendications précédentes, **caractérisée en ce que** les tôles ( 11, 12 ) ont une épaisseur de l'ordre de 0,5 à 5 mm et les canaux ( 9 ) une largeur de l'ordre de 2 à 10 mm.

9. Cellule ( 1 ) d'électrolyse suivant l'une des revendications précédentes, **caractérisée en ce que** les tôles ( 11, 12 ) sont constituées en un métal, notamment en acier conducteur de l'électricité, en fer, en cuivre ou en titane ou en comprennent.

10. Cellule ( 1 ) d'électrolyse suivant l'une des revendications 2 à 9, **caractérisée en ce que** les tôles ( 11, 12 ) sont en contact électrique entre elles par des parties où elles se touchent mutuellement directement et/ou **en ce que** les tôles ( 11, 12 ) sont en contact électrique avec les bornes ( 4 ) électriques de la cellule ( 1 ) d'électrolyse.

11. Procédé pour faire fonctionner une cellule ( 1 ) d'électrolyse suivant l'une des revendications précédentes, dans lequel on envoie, par une entrée ( 15 ) de fluide, un fluide, notamment de l'eau, qui passe dans les canaux ( 9 ) des au moins deux tôles ( 11, 12 ) et qui sort, notamment par une sortie ( 16 ) de fluide, de la cellule ( 1 ) d'électrolyse par les canaux ( 9 ) des au moins deux tôles ( 11, 12 ).

12. Procédé suivant la revendication 11, **caractérisé en ce que** l'on fait entrer, par une première entrée ( 5 ) de fluide, un fluide, notamment de l'eau, que l'on fait passer dans les canaux ( 9 ) des au moins deux premières tôles ( 11, 12 ) et que l'on le fait sortir de la cellule ( 1 ) d'électrolyse, notamment par une première sortie ( 16 ) de fluide, des canaux ( 9 ) des au moins deux premières tôles ( 11, 12 ) et **en ce que** l'on fait entrer, par une deuxième entrée ( 15 ) de fluide, un fluide, notamment de l'eau, que l'on fait passer dans les canaux ( 9 ) des au moins deux deuxièmes tôles ( 11, 12 ) et que l'on fait sortir de la cellule ( 1 ) d'électrolyse, notamment par une deuxième sortie ( 16 ) de fluide, par les canaux ( 9 ) des au moins deux deuxièmes tôles ( 11, 12 ), les au moins deux premières tôles ( 11, 12 ) et les au moins deux deuxièmes tôles ( 11, 12 ) étant séparées les unes des autres par une unité ( 7 ) membrane électrolyte.

13. Procédé suivant la revendication 12, **caractérisé en ce qu'**en appliquant une tension entre les au moins deux premières tôles ( 11, 12 ) et les au moins deux deuxièmes tôles ( 11, 12 ), notamment par des bornes ( 4 ) électriques, sur les plaques ( 3 ) bipolaires et/ou sur les tôles ( 11, 12 ), on effectue une transformation électrolytique de l'eau, en créant de l'hydrogène dans les canaux ( 9 ) des au moins deux premières tôles ( 11, 12 ) et en le faisant sortir de la cellule ( 1 ) d'électrolyse, notamment par la première sortie ( 16 ) de fluide, et en créant de l'oxygène dans les canaux ( 9 ) des au moins deux deuxièmes tôles ( 11, 12 ) et en le faisant sortir de la cellule ( 1 ) d'électrolyse, notamment par la deuxième sortie ( 16 ) de fluide, ou en créant de l'hydrogène dans les canaux ( 9 ) des au moins deux deuxièmes tôles ( 11, 12 ) et en le faisant sortir de la cellule ( 1 ) d'électrolyse, notamment par la deuxième sortie ( 16 ) de fluide, et en créant de l'oxygène dans les canaux ( 9 ) des au moins deux premières tôles ( 11, 12 ) et en le faisant sortir de la cellule ( 1 ) d'électrolyte, notamment par la première sortie ( 16 ) de fluide.

14. Procédé de fabrication d'une cellule ( 14 ) d'électrolyse suivant l'une des revendications 1 à 10, **caractérisé en ce que** l'on découpe et/ou l'on alèse et/ou l'on fraise et/ou l'on attaque et/ou l'on forme à l'aide d'un laser les évidements ( 14 ) dans les tôles ( 11, 12 ).
